# FASCICULE DE BREVET EUROPEEN

(11) **EP 3 390 829 B1**
(45) Date de publication et mention de la délivrance du brevet: **24.02.2021**
(21) Numéro de dépôt: 16816633.8
(22) Date de dépôt: 13.12.2016
(51) Int. Cl.: F04D 7/06, F04D 7/08, F04D 29/58, F04D 29/60, G21C 15/243

(54) **POMPE POUR FLUIDE CALOPORTEUR, RÉACTEUR NUCLÉAIRE ÉQUIPÉ D'UNE TELLE POMPE**
PUMPE FÜR WÄRMEÜBERTRAGUNGSFLÜSSIGKEIT UND KERNREAKTOR MIT SOLCH EINER PUMPE
PUMP FOR A HEAT-TRANSFER FLUID AND NUCLEAR REACTOR COMPRISING SUCH A PUMP

(30) Priorité: 14.12.2015 FR 1562307
(43) Date de publication de la demande: 24.10.2018
(73) Titulaire: FRAMATOME, 92400 Courbevoie (FR)
(72) Inventeur: MAZUY, Louis, 59600 Maubeuge (FR)
(74) Mandataire: Lavoix
(86) Numéro de dépôt international: PCT/EP2016/080802
(87) Numéro de publication internationale: WO 2017/102730

(56) Documents cités:
- EP-A1- 0 844 399
- FR-A1- 3 002 295
- US-A- 3 652 179
- US-A1- 2002 127 098

## Description

L'invention concerne en général les pompes pour la mise en circulation d'un fluide caloporteur dans un circuit fluidique.

Plus précisément, l'invention concerne selon un premier aspect une pompe pour la mise en circulation d'un fluide caloporteur selon la revendication 1.

Il est possible de fixer le diffuseur à la bride de barrière thermique par l'intermédiaire de gougeons. Dans ce cas, l'alignement axial du dispositif de refroidissement et du diffuseur l'un avec l'autre peut être assuré par une portion cylindrique ménagée à l'extrémité supérieure du diffuseur. La surface libre supérieure de cette partie cylindrique est en marche d'escalier, et présente une partie radialement interne légèrement en saillie par rapport à la partie radialement externe. Un joint d'étanchéité est interposé entre la partie radialement interne et la bride de barrière thermique.

Avec un tel agencement, le joint d'étanchéité est positionné dans une zone fortement déformée par les efforts résultant des gradients thermiques dans les pièces. En conséquence, il est difficile d'obtenir un degré d'étanchéité élevé entre ces deux pièces. D'autre part, lors des opérations de maintenance du matériel, l'alignement axial du diffuseur et du dispositif de refroidissement l'un avec l'autre nécessite souvent des usinages de réparation. La maintenance de la pompe est donc complexe. Enfin, les gougeons sont susceptibles de subir une corrosion sous contrainte FR3002295 A1 et US2002/127098 décrivent des pompes représentant le contexte de l'invention.

Dans ce contexte, l'invention vise à proposer une pompe qui ne présente pas les défauts ci-dessus.

A cette fin, l'invention porte sur une pompe du type précité, caractérisée en ce que le diffuseur comprend une bride de diffuseur pincée axialement entre la bride de barrière thermique et la volute, l'un du diffuseur et de la bride de barrière thermique comprenant une rainure externe entourant sur l'axe de rotation, l'autre du diffuseur et de la bride de barrière thermique comportant un tenon externe engagé dans la rainure externe et assurant l'alignement axial du dispositif de refroidissement et du diffuseur l'un avec l'autre, la rainure externe (65) étant circonférentielle, centrée sur l'axe de rotation (X).

Ainsi, le maintien en position du diffuseur par rapport à la volute est assuré en pinçant la bride de diffuseur axialement entre la bride de barrière thermique et la volute. Un tel agencement est simple, et permet de supprimer les gougeons de fixation du diffuseur à la bride de barrière thermique.

Du fait de la présence de la bride, et du fait que l'alignement axial du dispositif du refroidissement et du diffuseur est réalisé par le biais du tenon externe et de la rainure externe, la partie du diffuseur tournée vers la bride de barrière thermique est moins susceptible de se déformer. Or, l'alignement axial du dispositif de refroidissement et du diffuseur est essentiel à l'alignement des paliers guide de l'arbre de la pompe, et donc au bon comportement vibratoire de la pompe. L'invention peut améliorer l'alignement axial de la pompe, dans le sens où elle permet éviter les déformations et les opérations de réparation lors des démontages de la pompe.

Ainsi, la volute, le diffuseur et le dispositif de refroidissement sont maintenus en position les uns par rapport aux autres de manière stable à long terme, ce qui contribue à garantir l'étanchéité entre les pièces.

La pompe peut en outre représenter une ou plusieurs des caractéristiques ci-dessous considérées individuellement ou selon toutes les combinaisons techniquement possibles :
- la bride de diffuseur est en contact avec la bride de barrière thermique par un plan de contact, la rainure externe étant délimitée radialement vers l'intérieur par un tenon interne ménagé sur ledit un du diffuseur et de la bride de barrière thermique, le tenon interne s'étendant axialement au-delà du plan de contact et étant engagé dans une rainure interne ménagée dans ledit autre du diffuseur et de la bride de barrière thermique ;
- la pompe comprend un joint d'étanchéité de diffuseur interposé entre la bride de diffuseur et la volute ;
- la pompe comprend un joint d'étanchéité de barrière thermique interposé entre la bride de barrière thermique et la bride de diffuseur ;
- le circuit de refroidissement comporte au moins un conduit de refroidissement ayant un tronçon soudé sur la bride de barrière thermique, le tenon interne ou le tenon externe faisant saillie axialement vers le diffuseur, par rapport à un plan de contact entre la bride de diffuseur et la bride de barrière thermique, sur une hauteur inférieure à 200 mm ;
- le diffuseur comporte une partie cylindrique entourant l'axe de rotation, interposée radialement entre la volute et le circuit de refroidissement, et ayant radialement une épaisseur supérieure à 100 mm ;
- le dispositif de refroidissement comporte un couvercle disposé autour du circuit de refroidissement, ayant une virole disposée immédiatement à proximité de la partie cylindrique du diffuseur sans interposition d'une couche d'isolant thermique ; et
- le diffuseur comporte une partie annulaire solidaire de la partie cylindrique, isolant le circuit de refroidissement de la chambre de circulation, le couvercle ayant un fond interposé axialement entre le circuit de refroidissement et la partie annulaire, disposé immédiatement à proximité de la partie sans interposition d'une couche d'isolant thermique.

Selon un second aspect, l'invention porte sur un réacteur nucléaire comprenant :
- une cuve, dans laquelle est placé un cœur comportant des assemblages de combustible nucléaire ;
- un circuit primaire raccordant fluidiquement la cuve à un échangeur de chaleur ou à une turbine à vapeur, le circuit primaire comprenant une pompe ayant les caractéristiques ci-dessus pour la mise en circulation d'un fluide primaire dans le circuit primaire.

L'échangeur de chaleur est par exemple un générateur de vapeur.

D'autres caractéristiques et avantages de l'invention ressortiront de la description détaillée qui en est donnée ci-dessous, à titre indicatif et nullement limitatif, en référence aux figures annexées parmi lesquelles :
- la figure 1 est une représentation en coupe dans un plan axial d'une pompe conforme à l'invention ;
- la figure 2 est une représentation en coupe, agrandie, d'un d détail de la pompe de la figure 1, montrant la liaison entre le diffuseur et le dispositif de refroidissement.

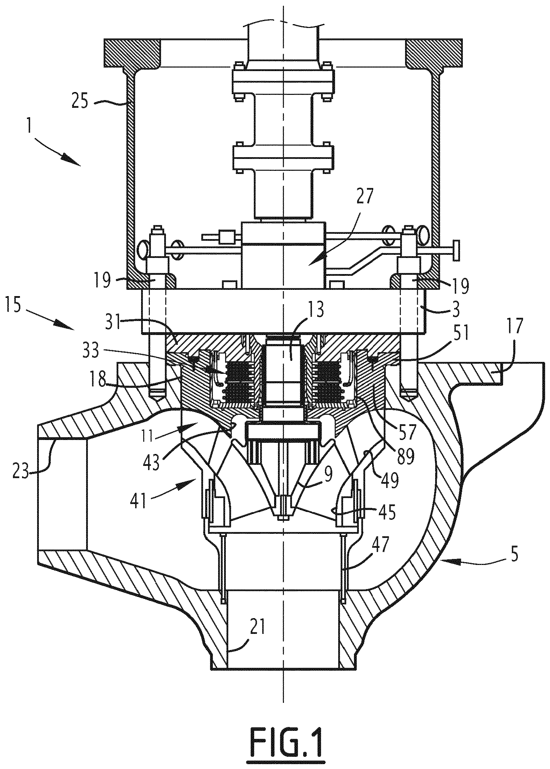

La pompe 1 représentée sur la figure 1 est prévue pour la mise en circulation d'un fluide caloporteur dans un circuit fluidique.

Typiquement, cette pompe est une pompe primaire de réacteur nucléaire, prévue pour la mise en circulation du fluide primaire de ce réacteur dans le circuit primaire. Le réacteur nucléaire, outre le circuit primaire, comporte une cuve sous pression, contenant le cœur du réacteur. Le cœur est composé d'assemblages de combustible nucléaire.

Dans un réacteur de type PWR, le circuit primaire raccorde la cuve du réacteur à un générateur de vapeur. Le fluide primaire est chauffé au contact des assemblages de combustible nucléaire, et cède une partie de son énergie calorifique à un fluide secondaire dans le générateur de vapeur. La pompe primaire assure la circulation du fluide primaire le long du circuit primaire, depuis la cuve du réacteur jusqu'au générateur de vapeur, puis le retour du fluide primaire du générateur de vapeur dans la cuve.

Dans un réacteur nucléaire de type BWR, le circuit primaire raccorde la cuve du réacteur à une turbine à vapeur. Le fluide primaire est vaporisé dans la cuve du réacteur, en passant au contact des assemblages de combustible nucléaire. La pompe primaire assure la circulation du fluide caloporteur depuis la cuve jusqu'à la turbine vapeur, et ramène le fluide caloporteur depuis la turbine à vapeur jusqu'à la cuve du réacteur.

En variante, la pompe est prévue pour être mise en œuvre dans un autre circuit d'un réacteur nucléaire, par exemple un circuit secondaire ou un circuit tertiaire ou tout autre circuit. Selon encore une autre variante, la pompe est prévue pour la mise en circulation d'un fluide caloporteur dans une installation industrielle autre qu'un réacteur nucléaire.

Le fluide caloporteur est de tout type. Par exemple, le fluide caloporteur comprend essentiellement de l'eau.

La pompe 1 comporte :
- une bride principale 3 ;
- une volute 5 délimitant intérieurement une chambre de circulation 7 du fluide caloporteur ;
- une roue de pompe 9 logée dans la chambre de circulation 7 ;
- un diffuseur 11 logé dans la chambre de circulation 7, agencé de manière à canaliser le fluide caloporteur mis en mouvement par la roue de pompe 9 ;
- un arbre 13 d'entraînement de la roue de pompe 9 en rotation autour d'un axe de rotation X, la roue de pompe 9 étant rigidement fixée à l'arbre d'entrainement 13 ;
- un dispositif 15 de refroidissement de l'arbre d'entrainement 13.

L'axe de rotation X est typiquement vertical. Dans la description qui va suivre, les termes « haut », « bas », « sous », « au-dessus », « supérieur » et « inférieur » sont entendus relativement à la direction verticale.

Comme visible sur la figure 1, la bride principale 3 est une pièce de forte épaisseur, en un matériau métallique tel que l'acier. Elle est sensiblement perpendiculaire à l'axe de rotation X.

La volute 5 est une pièce chaudronnée en un matériau métallique.

La volute 5 est rigidement fixée à la bride principale 3.

Pour ce faire, la volute 5 comporte une bride de volute 17, sensiblement perpendiculaire à l'axe X et comportant un orifice central 18 traversé par l'arbre d'entrainement 13. La bride de volute 17 est fixée à la bride principale 3 par des gougeons principaux 19, visibles sur la figure 1.

La pompe 1 est typiquement de type centrifuge. Ainsi, la volute 7 présente une entrée 21 d'aspiration du fluide caloporteur située dans le prolongement de l'arbre d'entrainement 13, et débouchant à l'intérieur de la chambre de circulation 7.

L'entrée 21 est située sous la roue de pompe 9.

La volute 5 présente également une sortie 23 de refoulement du fluide caloporteur, sensiblement radiale par rapport à l'axe de rotation X. Plus précisément, l'axe central de la sortie 23 est sensiblement perpendiculaire à l'axe X.

La pompe 1 comporte encore un moteur non représenté, disposé au-dessus de la bride principale 3. Le moteur est placé à l'intérieur d'un carter 25, rigidement fixé par les gougeons principaux 19 à la bride principale 3. Le carter 25 est situé au-dessus de la bride principale, et repose sur une face supérieure de la bride principale 3.

La pompe 1 comporte encore une pluralité de joints assurant une étanchéité tournante le long de l'arbre d'entrainement 13. Ces joints sont placés dans des logements de joints désignés collectivement par la référence 27.

Par ailleurs, la pompe 1 comporte des paliers de guidage en rotation de l'arbre 13. Le palier inférieur 29 est représenté sur les figures.

Le dispositif de refroidissement 15 comporte une bride de barrière thermique 31 et un circuit de refroidissement 33 lié à la bride de barrière thermique 31 et entourant l'arbre d'entrainement 13.

La bride de barrière thermique 31 s'étend dans un plan sensiblement perpendiculaire à l'axe de rotation X. Elle est placée immédiatement sous la bride principale 3, et est en contact direct avec une face inférieure de la bride principale 3.

La bride de barrière thermique 31 est interposée axialement entre la bride principale 3 et la volute 5. Plus précisément, elle est interposée entre la bride principale 3 et la bride de volute 17.

L'arbre d'entraînement 13 traverse axialement la bride principale 3, la bride de barrière thermique 31, et le diffuseur 11.

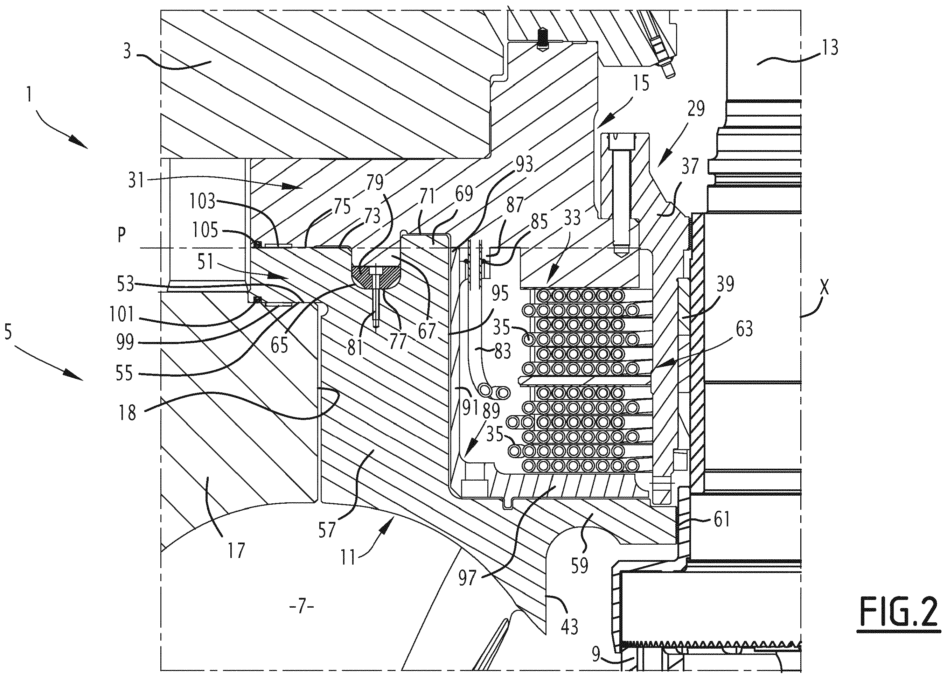

Le circuit de refroidissement 33 comporte un ou plusieurs serpentins 35, visibles notamment sur la figure 2. Il comporte encore un dispositif (non représenté) agencé pour faire circuler un fluide de refroidissement dans les serpentins 35. Chaque serpentin 35 comporte un ou plusieurs tubes, agencés de manière à former des spires circulaires autour de l'arbre d'entrainement 13. Les spires sont agencées en plusieurs nappes perpendiculaires à l'axe de rotation X, chaque nappe comportant plusieurs spires.

Comme visible sur la figure 2, le palier inférieur 29 comporte une cage 37 rigidement fixée à la bride de barrière thermique 31 et une pluralité d'organes de roulement 39 interposés entre la cage 37 et l'arbre d'entrainement 13. Par exemple, les organes de roulement 39 sont des rouleaux.

Les serpentins 35 sont agencés axialement au niveau du palier inférieur 29, et entourent les organes de roulement 39.

Le diffuseur 11 est une pièce métallique de forme complexe.

Il comporte une partie supérieure destinée au blocage en position du diffuseur 11 par rapport à la volute 5, et une partie inférieure 41 prévue pour canaliser le fluide caloporteur.

Comme visible sur la figure 1, la partie inférieure 41 du diffuseur est creuse et délimite un logement central 43 dans lequel est disposé la roue de pompe 9. Le logement 43 est ouvert vers le bas, et présente ainsi une ouverture d'entrée 45 disposée en regard de l'entrée d'aspiration 21 de la volute.

Un conduit 47 canalise le fluide caloporteur depuis l'entrée 21 jusqu'à l'ouverture d'aspiration 45.

La partie inférieure 41 du diffuseur présente également autour de la roue de pompe 9 une pluralité de canaux de refoulement 49, répartis circonférentiellement autour de l'axe de rotation X. Les canaux 49 sont agencés et orientés de manière à canaliser le fluide caloporteur mis en mouvement par la roue de pompe 9 vers la sortie de refoulement 23 de la volute.

Le diffuseur 11 comporte encore une bride de diffuseur 51 pincée axialement entre la bride de barrière thermique 31 et la volute 5.

La bride de diffuseur 51 fait partie de la partie supérieure du diffuseur.

Elle s'étend sensiblement perpendiculairement à l'axe de rotation X. Elle est pincée au sens où la bride de diffuseur 51 est directement au contact avec une face inférieure de la bride de barrière thermique 31 d'un côté, et directement en contact avec la volute 5 d'un autre côté.

Plus précisément, une face inférieure 53 de la bride de diffuseur 51 est plaquée contre une face supérieure 55 de la bride de diffuseur 17.

Ainsi, la bride de diffuseur 51 est sollicitée axialement contre la bride de diffuseur 17 par les gougeons principaux 19, qui sollicitent la bride principale 3 contre la bride de barrière thermique 31 et la bride de barrière thermique 31 contre la bride de diffuseur 51.

Le diffuseur 5 comporte encore une partie cylindrique 57, interposée radialement entre le dispositif de refroidissement 33 et la volute 5. La partie cylindrique 57 et le dispositif de refroidissement 33 sont disposés dans l'orifice central 18 de la bride de volute 17. La bride de diffuseur 51 fait saillie radialement vers l'extérieur à partir d'une extrémité supérieure de la partie cylindrique 57.

Le diffuseur 11 comporte encore une partie annulaire 59, solidaire de la partie cylindrique 57, délimitant un orifice de passage 61 pour l'arbre d'entrainement 13. La partie annulaire 59 fait saillie radialement vers l'intérieur à partir de la partie cylindrique 57. Elle est solidaire d'une extrémité inférieure de la partie cylindrique 57. Elle délimite ainsi avec la partie cylindrique 57 un volume torique 63, entourant l'arbre d'entrainement 13, dans lequel est logé le circuit de refroidissement 33.

Pour assurer l'alignement axial du dispositif de refroidissement 15 et du diffuseur 11 l'un avec l'autre, le diffuseur 11 comporte une rainure externe circonférentielle 65, centrée sur l'axe de rotation X.

Par ailleurs, la bride de barrière thermique 31 comporte un tenon externe 67 engagé dans la rainure externe 65.

La rainure externe 65 est ouverte vers le haut, c'est-à-dire vers la bride de barrière thermique 31. Elle est creusée dans la partie cylindrique 57 du diffuseur. En variante, elle est creusée dans la bride de diffuseur 51.

Elle s'étend circonférentiellement tout autour de l'axe X. En variante, elle ne s'étend pas circonférentiellement tout autour de l'axe de rotation X. Par exemple, dans ce cas, elle comporte plusieurs tronçons circonférentiels répartis autour de l'axe X.

Comme visible sur la figure 2, la rainure externe 65 considérée en section dans un plan contenant l'axe de rotation X, a une section en U. En variante, la rainure externe 65 a une section en V ou toute autre section adaptée.

La rainure externe 65 est délimitée radialement vers l'extérieur par une paroi radialement externe et vers l'intérieur par une paroi radialement interne. A froid, le centrage du diffuseur 11 est réalisé par le tenon externe 67 venant en appui contre la paroi radialement externe. A chaud, le centrage du diffuseur 11 est réalisé par le tenon externe 67 venant en appui contre la paroi radialement interne.

La rainure externe 65 est délimitée radialement vers l'intérieur, c'est-à-dire vers l'axe de rotation X, par un tenon interne 69, engagé dans une rainure interne 71 ménagée dans la bride de barrière thermique 31. La rainure interne 71 est creusée dans une grande face 73 de la bride de barrière thermique tournée vers le bas, c'est-à-dire vers le diffuseur 11. Le tenon interne 69 fait saillie axialement à partir de la partie cylindrique 57 du diffuseur 5. Il définit la paroi radialement interne de la rainure externe 65.

Comme précédemment, typiquement, la rainure 71 s'étend circonférentiellement tout autour de l'axe X. En variante, elle ne s'étend que sur une partie de la périphérie de l'axe de rotation X, et par exemple comporte plusieurs tronçons circonférentiels répartis autour de l'axe X.

La bride de diffuseur 51 est en contact avec la bride de barrière thermique 31 au niveau d'un plan de contact P matérialisé sur la figure 2. Plus précisément, la grande face 73 de la bride de barrière thermique 31 est en contact avec une grande face 75 de la bride de diffuseur 51, tournée vers le haut, au niveau du plan de contact P.

Le tenon externe 67 présente radialement par rapport à l'axe X une largeur sensiblement égale à celle de la rainure externe 65. En revanche, le tenon externe 67 présente une hauteur axiale inférieure à la profondeur de la rainure externe 65, prise axialement. La hauteur du tenon externe 67 est prise à partir du temps de contact P. De même, la profondeur de la rainure externe 65 est prise entre le plan de contact P et le fond 77 de la rainure externe. Une couronne 79 occupe la majeure partie du volume laissé libre ente le tenon 67 et le fond 77 de la rainure externe. Cette couronne est rigidement fixée au diffuseur 11 par des vis 81. Ainsi, on limite la quantité de fluide caloporteur susceptible de s'accumuler dans la rainure 65.

Comme visible sur la figure 2, les serpentins 35 présentent des tronçons d'extrémité 83 fixés par des soudures 85 à la bride de barrière thermique 31. Les tronçons d'extrémité 83 sont d'orientation axiale, et sont donc sensiblement perpendiculaires au plan de contact P. Les soudures 85 sont à proximité immédiate de la grande face 73. Par exemple, les soudures 85 solidarisent les tronçons d'extrémité 83 à des bossages 87 ménagés sur la grande face 73.

Le tenon externe 67 fait saillie axialement par rapport au plan de contact P sur une hauteur inférieure à 200 mm, de préférence inférieure à 100 mm.

Ainsi, le tenon externe 67, du fait de sa faible hauteur, ne gêne pas le débattement des outils de soudage permettant de réaliser les soudures 85.

Le tenon interne 69 présente, radialement par rapport à l'axe de rotation X, une largeur sensiblement égale ou légèrement inférieure à celle de la rainure interne 71. Axialement, il présente une hauteur sensiblement égale à la profondeur de la rainure interne 71. La hauteur du tenon interne 69 et la profondeur de la rainure interne 71 sont prises axialement à partir du plan de contact P.

Il est à noter que le dispositif de refroidissement 15 comporte typiquement un couvercle 89 disposé autour du circuit de refroidissement 33. Le couvercle 89 est logé à l'intérieur du volume torique 63. Dans l'exemple représenté, le couvercle 89 comporte une virole 91 disposée à proximité immédiate de la partie cylindrique 57 du diffuseur, sans interposition d'une couche d'isolant thermique. La virole 91 présente une forme générale cylindrique, centrée sur l'axe X. Elle est fixée par un bord supérieur 93 à la bride de barrière thermique 31.

La virole 91 s'étend à proximité immédiate de la surface cylindrique 95 délimitant radialement vers l'intérieur la partie cylindrique 57. Elle passe entre les tronçons d'extrémité 83 des serpentins et la surface cylindrique 95.

Le couvercle 89 comporte encore un fond 97, interposé axialement entre le circuit de refroidissement 33 et la partie annulaire 59 du diffuseur. Le fond 97 est disposé immédiatement à proximité de la partie annulaire 59, sans interposition d'une couche d'isolant thermique.

Le fond 97 présente une forme annulaire, et s'étend radialement vers l'intérieur, c'est-à-dire vers l'axe de rotation X, à partir d'un bord inférieur de la virole 91. Le fond 97 s'étend pratiquement jusqu'à la cage 37.

Comme visible sur la figure 2, la partie cylindrique 57 présente radialement une épaisseur supérieure à 100 mm, de préférence supérieure à 150 mm.

De ce fait, il n'est pas nécessaire de prévoir un écran thermique entre le couvercle et le diffuseur.

Par ailleurs, la pompe 1 comprend un joint d'étanchéité de diffuseur 99 entre la bride de diffuseur 51 et la volute 5. Typiquement, ce joint d'étanchéité de diffuseur 99 est un joint en graphite, en forme de spirale. Il s'étend sur toute la périphérie de l'axe de rotation X. Il est interposé entre la grande face inférieure 53 de la bride de diffuseur et la grande face supérieure 55 de la bride de volute 17.

Avantageusement, la pompe 1 comporte un joint supplémentaire 101 de diffuseur interposé entre la bride de diffuseur 51 et la volute 5. Le joint 101 est logé dans une gorge ménagée soit dans la grande face inférieure 53 soit dans la grande face supérieure 55. Il est placé radialement vers l'extérieur du joint 99. Ainsi, en cas de fuite à travers le joint de diffuseur 99, le fluide caloporteur est capté dans la gorge recevant le joint 101 et évacué par des canaux prévus à cet effet dans la pompe.

La pompe 1 comprend encore un joint d'étanchéité de barrière thermique 103 interposé entre la bride de barrière thermique 31 et la bride de diffuseur 51. Ce joint 103 est typiquement un joint en graphite en forme de spirale. Il est interposé entre la grande face supérieure 73 de la bride de diffuseur et la grande face inférieure 75 de la bride de barrière thermique.

Comme précédemment, la pompe 1 présente avantageusement un joint supplémentaire de barrière thermique 105, logé dans une gorge ménagée soit dans la grande face 73 soit dans la grande face 75. Le joint 105 est disposé radialement à l'extérieur du joint d'étanchéité de barrière thermique 103. Ainsi, en cas de fuite à travers le joint 103, le fluide caloporteur est collecté dans la gorge recevant le joint 105 et évacué par des canaux prévus à cet effet dans la pompe.

On conçoit donc que l'alignement axial du dispositif de refroidissement 15 et du diffuseur 11 est obtenu de manière particulièrement simple, du fait de l'existence de la rainure externe 65 et du tenon externe 67. La rainure interne 71 et le tenon interne 69 facilitent encore cet alignement.

L'étanchéité entre les pièces est particulièrement facile à obtenir, du fait de la présence de la bride de barrière thermique et de la bride de diffuseur. Ces brides offrent des surfaces planes de grandes tailles permettant d'agencer des joints d'étanchéité de manière simple et d'obtenir un bon niveau d'étanchéité. Les surfaces planes permettent aussi d'utiliser des joints efficaces pour une haute pression différentielle, et résistants aux frottements avec la surface plane en vis-à-vis.

Selon une variante non préférée, la pompe comporte un écran thermique entre la partie cylindrique 57 et la virole 91 du couvercle et/ou comporte un écran thermique entre le fond 97 du couvercle et la partie annulaire 59 du diffuseur.

Selon une autre variante de réalisation, le tenon externe 67 est ménagé sur le diffuseur, et la rainure externe 65 est creusée dans la bride de barrière thermique 31. Dans ce cas, le tenon interne 69 est porté par la bride de barrière thermique 31 et la rainure interne 71 est creusée dans le diffuseur. Il fait saillie axialement par rapport au plan de contact P sur une hauteur inférieure à 400mm, de préférence 200mm.

## Revendications

1. Pompe (1) pour la mise en circulation d'un fluide caloporteur dans un circuit fluidique, la pompe (1) comportant :
- une bride principale (3) ;
- une volute (5) délimitant intérieurement une chambre (7) de circulation du fluide caloporteur, la volute (5) étant rigidement fixée à la bride principale (3) ;
- une roue de pompe (9) logée dans la chambre de circulation (7) ;
- un diffuseur (11) logé dans la chambre de circulation (7), agencé de manière à canaliser le fluide caloporteur mis en mouvement par la roue de pompe (9) ;
- un arbre d'entraînement (13) de la roue de pompe (9) en rotation autour d'un axe de rotation (X), traversant axialement la bride principale (3) et le diffuseur (11), la roue de pompe (9) étant rigidement fixée à l'arbre d'entraînement (13) ;
- un dispositif de refroidissement (15) de l'arbre d'entraînement (13), comportant une bride de barrière thermique (31) interposée axialement entre la bride principale (3) et la volute (5), et un circuit de refroidissement (33) lié à la bride de barrière thermique (31) et entourant l'arbre d'entraînement (13) le diffuseur (11) comprenant une bride de diffuseur (51) pincée axialement entre la bride de barrière thermique (31) et la volute (5);
**caractérisée en ce que** l'un du diffuseur (11) et de la bride de barrière thermique (31) comprend une rainure externe (65) entourant sur l'axe de rotation (X), l'autre du diffuseur (11) et de la bride de barrière thermique (31) comportant un tenon externe (67) engagé dans la rainure externe (65) et assurant l'alignement axial du dispositif de refroidissement (15) et du diffuseur (11) l'un avec l'autre, la rainure externe (65) étant circonférentielle, centrée sur l'axe de rotation (X).

2. Pompe selon la revendication 1, **caractérisée en ce que** la bride de diffuseur (51) est en contact avec la bride de barrière thermique (31) par un plan de contact (P), la rainure externe (65) étant délimitée radialement vers l'intérieur par un tenon interne (69) ménagé sur ledit un du diffuseur (11) et de la bride de barrière thermique (31), le tenon interne (69) s'étendant axialement au-delà du plan de contact (P) et étant engagé dans une rainure interne (71) ménagée dans ledit autre du diffuseur (11) et de la bride de barrière thermique (31).

3. Pompe selon la revendication 2, **caractérisée en ce que** le circuit de refroidissement (33) comporte au moins un conduit de refroidissement (35) ayant un tronçon (83) soudé sur la bride de barrière thermique (31), et **en ce que** le tenon interne (69) fait saillie axialement vers le diffuseur (11), par rapport au plan de contact (P) entre la bride de diffuseur (51) et la bride de barrière thermique (31), sur une hauteur inférieure à 200 mm.

4. Pompe selon la revendication 1 ou 2, **caractérisée en ce que** le circuit de refroidissement (33) comporte au moins un conduit de refroidissement (35) ayant un tronçon (83) soudé sur la bride de barrière thermique (31), le tenon externe (67) faisant saillie axialement vers le diffuseur (11), par rapport à un plan de contact (P) entre la bride de diffuseur (51) et la bride de barrière thermique (31), sur une hauteur inférieure à 200 mm.

5. Pompe selon l'une quelconque des revendications précédentes, **caractérisée en ce que** la pompe (1) comprend un joint d'étanchéité de diffuseur (99) interposé entre la bride de diffuseur (51) et la volute (5).

6. Pompe selon l'une quelconque des revendications précédentes, **caractérisée en ce que** la pompe (1) comprend un joint d'étanchéité de barrière thermique (103) interposé entre la bride de barrière thermique (31) et la bride de diffuseur (51).

7. Pompe selon l'une quelconque des revendications précédentes, **caractérisée en ce que** le diffuseur (11) comporte une partie cylindrique (57) entourant l'axe de rotation (X), interposée radialement entre la volute (5) et le circuit de refroidissement (33), et ayant radialement une épaisseur supérieure à 100 mm.

8. Pompe selon la revendication 7, **caractérisée en ce que** le dispositif de refroidissement (15) comporte un couvercle (89) disposé autour du circuit de refroidissement (33), ayant une virole (91) disposée immédiatement à proximité de la partie cylindrique (57) du diffuseur (11) sans interposition d'une couche d'isolant thermique.

9. Pompe selon la revendication 8, **caractérisée en ce que** le diffuseur (11) comporte une partie annulaire (59) solidaire de la partie cylindrique (57), isolant le circuit de refroidissement (33) de la chambre de circulation (7), le couvercle (89) ayant un fond (97) interposé axialement entre le circuit de refroidissement (33) et la partie annulaire (59), disposé immédiatement à proximité de la partie annulaire (59) sans interposition d'une couche d'isolant thermique.

10. Pompe selon l'une quelconque des revendications précédentes, **caractérisée en ce que** la rainure externe (65) a une section en U, considérée en section dans un plan contenant l'axe de rotation (X).

11. Pompe selon l'une quelconque des revendications précédentes, **caractérisée en ce que** le centrage du diffuseur (11) à froid est réalisé par le tenon externe (67) venant en appui contre une paroi externe de la rainure (65), et est réalisé à chaud par le tenon externe (67) venant en appui contre une paroi radialement interne de la rainure externe (65).

12. Réacteur nucléaire, comprenant :
- une cuve dans laquelle est placé un cœur comportant des assemblages de combustible nucléaire ;
- un circuit primaire raccordant fluidiquement la cuve à un échangeur de chaleur ou à une turbine à vapeur, le circuit primaire comprenant une pompe selon l'une quelconque des revendications précédentes pour la mise en circulation d'un fluide primaire dans le circuit primaire.

## Patentansprüche

1. Pumpe (1) für das In-Zirkulation-Versetzen eines Kühlmittel-Fluids in einem Fluid-Kreislauf, wobei die Pumpe (1) aufweist:
- einen Hauptflansch (3),
- eine Volute (5), welche innen eine Kammer (7) für die Zirkulation des Kühlmittel-Fluids begrenzt, wobei die Volute (5) starr am Hauptflansch (3) befestigt ist,
- ein Pumpe-Rad (9), welches in der Kammer für die Zirkulation (7) untergebracht ist,
- einen in der Kammer für die Zirkulation (7) untergebrachten Diffusor (11), welcher auf eine Weise angeordnet ist, um das Kühlmittel-Fluid zu kanalisieren, welches mittels des Pumpe-Rades (9) in Bewegung versetzt wird,
- eine Welle zum Antreiben (13) des Pumpe-Rades (9) in Rotation um eine Drehachse (X) herum, welche den Hauptflansch (3) und den Diffusor (11) axial durchläuft, wobei das Pumpe-Rad (9) starr an der Welle zum Antreiben (13) befestigt ist,
- eine Vorrichtung zur Kühlung (15) der Welle zum Antreiben (13), welche aufweist einen Thermische-Barriere-Flansch (31), welcher axial zwischen dem Hauptflansch (3) und der Volute (5) angeordnet ist, und einen Kühlung-Kreislauf (33), welcher mit dem Thermische-Barriere-Flansch (31) verbunden ist und die Welle zum Antreiben (13) umgibt, wobei der Diffusor (11) einen Diffusor-Flansch (51) aufweist, welcher axial zwischen den Thermische-Barriere-Flansch (31) und die Volute (5) geklemmt ist,
**dadurch gekennzeichnet, dass**
einer des Diffusors (11) und des Thermische-Barriere-Flansches (31) eine äußere Nut (65) aufweist, welche die Drehachse (X) umgibt, wobei der andere des Diffusors (11) und des Thermische-Barriere-Flansches (31) einen äußeren Zapfen (67) aufweist, welcher mit der äußeren Nut (65) im Eingriff ist und die axiale Ausrichtung der Vorrichtung zur Kühlung (15) und des Diffusors (11) zueinander sicherstellt, wobei die äußere Nut (65) umfänglich ist und zur Drehachse (X) zentriert ist.

2. Pumpe gemäß Anspruch 1, **dadurch gekennzeichnet, dass** der Diffusor-Flansch (51) in Kontakt mit dem Thermische-Barriere-Flansch (31) mittels einer Kontaktebene (P) ist, wobei die äußere Nut (65) radial nach innen mittels eines inneren Zapfens (69) begrenzt ist, welcher am besagten einen des Diffusors (11) und des Thermische-Barriere-Flansches (31) vorgesehen ist, wobei sich der innere Zapfen (69) axial über die Kontaktebene (P) hinaus erstreckt und im Eingriff mit einer inneren Nut (71) ist, welche im besagten anderen des Diffusors (11) und des Thermische-Barriere-Flansches (31) vorgesehen ist.

3. Pumpe gemäß Anspruch 2, **dadurch gekennzeichnet, dass** der Kühlung-Kreislauf (33) mindestens eine Kühlung-Leitung (35) aufweist, welche einen Abschnitt (83) hat, welcher an den Thermische-Barriere-Flansch (31) geschweißt ist, und dadurch, dass der innere Zapfen (69) axial zum Diffusor (11) bezüglich der Kontaktebene (P) zwischen dem Diffusor-Flansch (51) und dem Thermische-Barriere-Flansch (31) über eine Höhe, welche kleiner als 200 mm ist, vorsteht.

4. Pumpe gemäß Anspruch 1 oder 2, **dadurch gekennzeichnet, dass** der Kühlung-Kreislauf (33) mindestens eine Kühlung-Leitung (35) aufweist, welche einen Abschnitt (83) hat, welcher an den Thermische-Barriere-Flansch (31) geschweißt ist, wobei der äußere Zapfen (67) axial zum Diffusor (11) bezüglich einer Kontaktebene (P) zwischen dem Diffusor-Flansch (51) und dem Thermische-Barriere-Flansch (31) über eine Höhe, welche kleiner als 200 mm ist, vorsteht.

5. Pumpe gemäß irgendeinem der vorherigen Ansprüche, **dadurch gekennzeichnet, dass** die Pumpe (1) eine Diffusor-Dichtung (99) aufweist, welche zwischen dem Diffusor-Flansch (51) und der Volute (5) angeordnet ist.

6. Pumpe gemäß irgendeinem der vorherigen Ansprüche, **dadurch gekennzeichnet, dass** die Pumpe (1) eine Thermische-Barriere-Dichtung (103) aufweist, welche zwischen dem Thermische-Barriere-Flansch (31) und dem Diffusor-Flansch (51) angeordnet ist.

7. Pumpe gemäß irgendeinem der vorherigen Ansprüche, **dadurch gekennzeichnet, dass** der Diffusor (11) einen die Drehachse (X) umgebenden zylindrischen Abschnitt (57) aufweist, welcher radial zwischen der Volute (5) und dem Kühlung-Kreislauf (33) angeordnet ist, und radial eine Dicke hat, welche größer als 100 mm ist.

8. Pumpe gemäß Anspruch 7, **dadurch gekennzeichnet, dass** die Kühlung-Vorrichtung (15) eine Abdeckung (89) aufweist, welche um den Kühlung-Kreislauf (33) herum angeordnet ist und eine Ferrule (91) hat, welche unmittelbar in der Nähe des zylindrischen Abschnitts (57) des Diffusors (11) angeordnet ist, ohne dass eine Thermische-Isolation-Schicht dazwischen angeordnet ist.

9. Pumpe gemäß Anspruch 8, **dadurch gekennzeichnet, dass** der Diffusor (11) einen mit dem zylindrischen Abschnitt (57) fest verbundenen ringförmigen Abschnitt (59) aufweist, welcher den Kühlung-Kreislauf (33) von der Kammer für die Zirkulation (7) isoliert, wobei die Abdeckung (89) einen axial zwischen dem Kühlung-Kreislauf (33) und dem ringförmigen Abschnitt (59) angeordneten Boden (97) aufweist, welcher unmittelbar in der Nähe des ringförmigen Abschnitts (59) angeordnet ist, ohne dass eine Thermische-Isolation-Schicht dazwischen angeordnet ist.

10. Pumpe gemäß irgendeinem der vorherigen Ansprüche, **dadurch gekennzeichnet, dass** die äußere Nut (65) einen U-Querschnitt hat, betrachtet im Schnitt in einer Ebene, welche die Drehachse (X) enthält.

11. Pumpe gemäß irgendeinem der vorherigen Ansprüche, **dadurch gekennzeichnet, dass** die Zentrierung des Diffusors (11) im Kalten realisiert wird, indem der äußere Zapfen (67) in Anlage gegen eine Außenwand der Nut (65) gerät, und im Warmen realisiert wird, indem der äußere Zapfen (67) in Anlage gegen eine radial innere Wand der äußeren Nut (65) gerät.

12. Kernreaktor, welcher aufweist:
- einen Behälter, in welchem ein Kern angeordnet ist, welcher Kernbrennstoffelemente aufweist,
- einen Primärkreislauf, welcher den Behälter mit einem Wärmetauscher oder mit einer Dampfturbine fluidverbindet, wobei der Primärkreislauf eine Pumpe gemäß irgendeinem der vorherigen Ansprüche zum In-Zirkulation-Versetzen eines Primärfluids im Primärkreislauf aufweist.

## Claims

1. A pump (1) for causing a heat-transport fluid to flow in a fluid circuit, the pump (1) including:
- a main flange (3);
- a volute (5) inwardly delimiting a flow chamber (7) of the heat-transfer fluid, the volute (5) being rigidly fastened to the main flange (3);
- a pump wheel (9) housed in the flow chamber (7);
- a diffuser (11) housed in the flow chamber (7), arranged so as to channel the heat-transfer fluid set in motion by the pump wheel (9);
- a drive shaft (13) rotating the pump wheel (9) around a rotation axis (X), axially traversing the main flange (3) and the diffuser (11), the pump wheel (9) being rigidly fastened to the drive shaft (13);
- a device (15) for cooling the drive shaft (13), including a thermal barrier flange (31) axially inserted between the main flange (3) and the volute (5), and a cooling circuit (33) connected to the thermal barrier flange (31) and surrounding the drive shaft (13), the diffuser (11) comprises a diffuser flange (51) clamped axially between the thermal barrier flange (31) and the volute (5);
**characterized in that** one of the diffuser (11) and the thermal barrier flange (31) comprises an outer groove (65) surrounding the rotation axis (X), the other of the diffuser (11) and the thermal barrier flange (31) including an outer tenon (67) engaged in the outer groove (65) and providing the axial alignment of the cooling device (15) and the diffuser (11) with one another, the outer groove (65) being circumferential, centered on the rotation axis (X).

2. The pump according to claim 1, **characterized in that** the diffuser flange (51) is in contact with the thermal barrier flange (31) by a contact plane (P), the outer groove (65) being radially inwardly delimited by an inner tenon (69) arranged on said one of the diffuser (11) and the thermal barrier flange (31), the inner tenon (69) extending axially past the contact plane (P) and being engaged in an inner groove (71) arranged inside said other of the diffuser (11) and the thermal barrier flange (31).

3. The pump according to claim 2, **characterized in that** the cooling circuit (33) includes at least one cooling duct (35) having a segment (83) welded on the thermal barrier flange (31), and **in that** the inner tenon (69) protrudes axially toward the diffuser (11), relative to the contact plane (P) between the diffuser flange (51) and the thermal barrier flange (31), over a height smaller than 200 mm.

4. The pump according to claim 1 or 2, **characterized in that** the cooling circuit (33) includes at least one cooling duct (35) having a segment (83) welded on the thermal barrier flange (31), the outer tenon (67) protruding axially toward the diffuser (11), relative to a contact plane (P) between the diffuser flange (51) and the thermal barrier flange (31), over a height smaller than 200 mm.

5. The pump according to any one of the preceding claims, **characterized in that** the pump (1) comprises a diffuser sealing gasket (99) inserted between the diffuser flange (51) and the volute (5).

6. The pump according to any one of the preceding claims, **characterized in that** the pump (1) comprises a thermal barrier sealing gasket (103) inserted between the thermal barrier flange (31) and the diffuser flange (51).

7. The pump according to any one of the preceding claims, **characterized in that** the diffuser (11) includes a cylindrical part (57) surrounding the rotation axis (X), inserted radially between the volute (5) and the cooling circuit (33), and radially having a thickness greater than 100 mm.

8. The pump according to claim 7, **characterized in that** the cooling device (15) includes a cover (89) positioned around the cooling circuit (33), having a shroud (91) arranged in the immediate vicinity of the cylindrical part (57) of the diffuser (11) without inserting a thermally insulating layer in between.

9. The pump according to claim 8, **characterized in that** the diffuser (11) includes an annular part (59) secured to the cylindrical part (57), insulating the cooling circuit (33) from the flow chamber (7), the cover (89) having a bottom (97) inserted axially between the cooling circuit (33) and the annular part (59), arranged in the immediate vicinity of the annular part (59) without inserting a thermally insulating layer in between.

10. The pump according to any one of the preceding claims, **characterized in that** the outer groove (65) has a U-shaped section, considered in section in a plane containing the rotation axis (X).

11. The pump according to any one of the preceding claims, **characterized in that** the centering of the diffuser (11) cold is done by the outer tenon (67) bearing against an outer wall of the groove (65), and is done warm by the outer tenon (67) bearing against a radially inner wall of the outer groove (65).

12. A nuclear reactor, comprising:
- a vessel, in which a core is placed including nuclear fuel assemblies;
- a primary circuit fluidly connecting the vessel to a heat exchanger or a steam turbine, the primary circuit comprising a pump according to any one of the preceding claims for circulating a primary fluid in the primary circuit.
